# EUROPÄISCHE PATENTSCHRIFT

(11) **EP 1 632 865 B1**
(45) Veröffentlichungstag und Bekanntmachung des Hinweises auf die Patenterteilung: **19.05.2010**
(21) Anmeldenummer: 05106497.0
(22) Anmeldetag: 14.07.2005
(51) Int. Cl.: G06F 13/38

(54) **Datenbus-Interface für ein Steuergerät und Steuergerät mit einem Datenbus-Interface**
Databus interface for a controller and controller with a databus interface
Interface de bus de données pour un appareil de commande et un appareil de commande avec une interface de bus de données

(30) Priorität: 02.09.2004 DE 102004042380
(43) Veröffentlichungstag der Anmeldung: 08.03.2006
(73) Patentinhaber: ROBERT BOSCH GMBH, 70442 Stuttgart (DE)
(72) Erfinder: Michelberger, Steffen, 74831, Gundelsheim (DE); Joos, Eugen, 74374, Zaberfeld (DE)

(56) Entgegenhaltungen:
- WO-A-98/44399
- GB-A- 2 345 153

## Beschreibung

### Stand der Technik

Die vorliegende Erfindung betrifft ein Datenbus-Interface für ein Steuergerät, insbesondere für ein Kraftfahrzeugsteuergerät.

Die Erfindung betrifft außerdem ein Steuergerät, insbesondere ein Kraftfahrzeugsteuergerät, mit einem Datenbus-Interface zum Zugriff auf einen Datenbus zur Kommunikation mit mindestens einem anderen Steuergerät über den Datenbus.

Als Interface wird hier eine Schnittstelle zwischen einem oder mehreren Mikroprozessoren einerseits und einem Datenbus andererseits bezeichnet. Das Interface bereitet Signale eines Mikroprozessors, die über einen Datenbus an einen anderen Mikroprozessor übertragen werden sollen, gemäß einem gewählten Übertragungsprotokoll (z. B. CAN (Controller Area Network), TTCAN (Time Triggered CAN), MOST (Media Oriented Systems Transport), FlexRay, etc.) auf, bevor sie auf den Datenbus eingekoppelt werden. Das Interface kann Teil eines Steuergerätes, insbesondere Teil eines Kraftfahrzeugsteuergerätes, sein. Dann können auf den Mikrocontrollern Steuerprogramme zur Erfüllung einer bestimmungsgemäßen Steuerungs- und/oder Regelungsfunktion abgearbeitet werden und sie können zur Steuerung und Koordination der Kommunikation über die Datenbusse dienen. Es ist aber auch denkbar, dass die Mikrocontroller des Interfaces lediglich zur Steuerung und Koordination der Kommunikation über die Datenbusse dienen und die zu übertragenden Daten von anderen Mikrocontrollern erhalten und die erhaltenen Daten nur weiterleiten. Mit Hilfe eines Interfaces kann mindestens ein Steuergerät an einen Datenbus angeschlossen werden. Die an den gleichen Datenbus angeschlossenen Steuergeräte können dann über den Datenbus untereinander Informationen austauschen.

Aus dem Stand der Technik ist es an sich bekannt, in einem CAN-Interface nicht nur einen, sondern zwei oder noch mehr Rechengeräte, insbesondere Mikroprozessoren, in Form von Mikrocontrollern vorzusehen. Dabei werden in der Regel jedoch nur solche Mikroprozessoren in einem CAN-Interface miteinander kombiniert, die lediglich einen CAN-Controller aufweisen. An sich bekannt sind jedoch auch Mikrocontroller mit mehr als einem, beispielsweise zwei, CAN-Controllern. Somit ist aus dem Stand der Technik zum einen ein CAN-Interface mit mehreren Mikrocontrollern bekannt. Zum anderen ist ein CAN-Interface bekannt, das lediglich einen Mikrocontroller, jedoch mit mehreren CAN-Controllern umfasst.

Nach dem Stand der Technik erfolgt in einem CAN-Interface mit mehreren Mikrocontrollern die interne Kommunikation zwischen den einzelnen Controllern über ein Dual-Port-RAM (Random Access Memory). Diese sind jedoch sehr teuer und benötigen viel Energie. Insbesondere im Kraftfahrzeugbereich herrscht ein enormer Kostendruck und steht Energie nicht in unbegrenztem Umfang zur Verfügung.

Der Einsatz von Dual-Port-RAMs zur Kommunikation zwischen den Mikroprozessoren eines Mehrprozessorsystems ist also für Kraftfahrzeuge nicht besonders gut geeignet.

Das Dokument WO 98/44399 offenbart ein Datenbus-Interface mit zwei Mikropozessoren die über einen Datenbus miteinander kommunisieren.

Der vorliegenden Erfindung liegt die Aufgabe zu Grunde, ein Datenbus-Interface der eingangs genannten Art dahingehend auszugestalten und weiterzubilden, dass es besonders flexibel eingesetzt werden kann und kostengünstig in der Herstellung ist.

Zur Lösung dieser Aufgabe wird ausgehend von dem Datenbus-Interface der eingangs genannten Art vorgeschlagen, dass das Interface nach Anspruch 1.

### Vorteile der Erfindung

Sowohl die Mikroprozessoren als auch die Transceiver des erfindungsgemäßen Datenbus-Interfaces sind auf einem gemeinsamen Leiterplatte integriert. Die Mikroprozessoren in Form von Mikrocontrollern verfügen jeweils über zwei Datenbus-Controller, um die Kommunikationsfähigkeit des Interfaces zu erhöhen. Einer der Datenbus-Controller dient zur externen Kommunikation der Mikrocontroller mit entsprechenden Mikrocontrollern in anderen Datenbus-Interfaces und der andere Datenbus-Controller wird zur internen Kommunikation zwischen den Mikrocontrollern eingesetzt.

Für die externe Datenkommunikation ist mindestens ein externer Datenbus vorgesehen. Der mindestens eine Datenbus ist außerhalb des Datenbus-Interfaces angeordnet. Jeder der Mikrocontroller ist über eine gemeinsame oder jeweils eine eigene Sende-Empfangs-Einheit (Transceiver) an dem mindestens einen externen Datenbus angeschlossen. Über den externen Datenbus sind die Mikrocontroller des erfindungsgemäßen Datenbus-Interfaces mit anderen Datenbus-Interfaces bzw. mit deren Mikrocontroller verbunden und können mit diesen über den mindestens einen externen Datenbus Informationen austauschen. Die Mikrocontroller sind jeweils über einen ihrer Datenbus-Controller (den sogenannten ersten Datenbus-Controller) an die Transceiver angeschlossen.

Es ist denkbar, dass die beiden Transceiver an ein und denselben externen Datenbus angeschlossen sind. Genauer gesagt, sind die ersten Datenbus-Controller von beiden Transceivern an den gleichen Datenbus angeschlossen. Aufgrund der Tatsache, dass jeder Datenbus-Controller nur eine bestimmte Anzahl an Nachrichtenobjekten (sogenannte Message Objects) verwalten kann, hat diese Ausgestaltung der Erfindung den Vorteil, dass das erfindungsgemäße Datenbus-Interface für einen bestimmten Datenbus deutlich mehr, in dem vorliegenden Fall mit zwei Mikrocontrollern nämlich genau doppelt so viele, Nachrichtenobjekte verwalten kann.

Alternativ wird vorgeschlagen, dass die beiden Transceiver an unterschiedlichen externen Datenbussen angeschlossen sind. Mit anderen Worten ist der erste Datenbus-Controller des ersten Mikrocontrollers über den ersten Transceiver an einen ersten externen Datenbus und der erste Datenbus-Controller des zweiten Mikrocontrollers über den zweiten Transceiver an einen zweiten externen Datenbus angeschlossen. Die unterschiedlichen Datenbusse können mit der gleichen oder mit unterschiedlichen Übertragungsraten arbeiten. Des weiteren ist es denkbar, dass über die beiden Datenbusse Signale nach unterschiedlichen oder den gleichen Übertragungsgeschwindigkeiten übertragen werden. Gemäß dieser alternativen Ausgestaltung könnte das erfindungsgemäße Datenbus-Interface beispielsweise als ein sogenanntes Gateway arbeiten. Damit kann das Datenbus-Interface über zwei Datenbusse kommunizieren, wobei der bidirektionale Informationsaustausch über das Steuergerät bzw. das Datenbus-Interface hinweg in beide Datenbusse möglich ist.

Zur internen Kommunikation wird ein interner Datenbus eingesetzt, der innerhalb des Datenbus-Interfaces ausgebildet ist und die beiden Mikrocontroller über ihre zweiten Datenbus-Controller miteinander verbindet. Die Mikrocontroller können ohne eine Sende-Empfangs-Einheit (Transceiver) direkt an den internen Datenbus angeschlossen werden, da die über den internen Datenbus zu überbrückende Entfernung relativ gering ist und kaum Störungen (sogenannter Potential- und/oder Pegelversatz) auf die über den internen Datenbus übertragenen Signale einwirken. Außerdem ist die Anzahl der über den internen Datenbus übertragenen verschiedenen Signale relativ gering, so dass eine wechselseitige Beeinträchtigung der Signale ebenfalls nahezu ausgeschlossen werden kann. Insgesamt kommt also der interne Datenbus aufgrund seiner einfachen und übersichtlichen Topologie und des reduzierten Signalverkehrs im Normalbetrieb ohne Transceiver aus. Der Datenaustausch über den internen Datenbus ist einfach und kostengünstig zu realisieren, arbeitet aber dennoch schnell, sicher und zuverlässig. Der interne Datenbus kann beispielsweise als ein CAN-Datenbus ausgebildet sein.

Insgesamt ergibt sich also ein für die unterschiedlichsten Anwendungen flexibel einsetzbares und kostengünstig zu realisierendes Datenbus-Interface. Das Datenbus-Interface kann für nahezu alle Arten der Datenbus-Vernetzung der beiden Rechengeräte konfiguriert werden. Aufgrund der flexiblen Einsatzmöglichkeiten des Datenbus-Interfaces ist infolge der damit verbundenen hohen Stückzahlen davon auszugehen, dass das Interface gegenüber bekannten Interfaces selbst dann noch Kostenvorteile hat, wenn nicht alle Funktionen des erfindungsgemäßen Datenbus-Interfaces genutzt werden, wenn beispielsweise beide Mikrocontroller über einen gemeinsamen Transceiver an den externen Datenbus angeschlossen sind und der nicht an den externen Datenbus angeschlossene Mikrocontroller über den internen Datenbus und den anderen Mikrocontroller, der an den externen Datenbus angeschlossen ist, Daten sendet und empfängt. Dabei bliebe der zweite Transceiver ungenutzt.

Gemäß einer vorteilhaften Weiterbildung der vorliegenden Erfindung wird vorgeschlagen, dass der interne Datenbus zwei Leitungen umfasst, die ohne Sende-Empfangs-Einheiten (Transceiver) an die zwei Rechengeräte angeschlossen sind. Genauer gesagt, sind die beiden Leitungen direkt an einen der Datenbus-Controller (den sogenannten zweiten Datenbus-Controller) der beiden Rechengeräte angeschlossen.

Gemäß einer bevorzugten Ausführungsform der Erfindung wird vorgeschlagen, dass die Leitungen des internen Datenbusses über offene Kollektor-Ausgänge (sogenannte open-collector-Anschlüsse) an die zwei Rechengeräte angeschlossen sind. Mit anderen Worten, verfügt also der zweite Datenbus-Controller der beiden Mikrocontroller des Datenbus-Interfaces über open-collector-Anschlüsse, an denen der interne Datenbus angeschlossen ist. Bei einer open-collector Schaltung können zwar Unsymmetrien dergestalt auftreten, dass ein Signal relativ schnell auf "low" (LO) wechselt, indem ein Transistor der open-collector-Schaltung nach Masse schaltet, das Signal aufgrund von parasitären Kapazitäten in der Schaltung aber nur langsam ansteigt, das heißt auf "high" (HI) wechselt. Die resultierenden Signalunsymmetrien können intern jedoch toleriert werden.

Alternativ wird vorgeschlagen, dass die zwei Rechengeräte über Gegentakt-Ausgänge (sogenannte push-pull-Anschlüsse) an die Sende-Empfangs-Einheiten angeschlossen sind. Der erste Datenbus-Controller der beiden Mikrocontroller ist über die push-pull-Anschlüsse und einen Transceiver an den externen Datenbus angeschlossen, da eine push-pull-Schaltung weniger Unsymmetrien aufweist als eine open-collector-Schaltung, so dass die Signalübertragung zwischen den Mikrocontrollern und dem externen Datenbus ISO (International Organisation for Standardization)- und CARB-(California Air Resources Board)-konform und CARB-(mit nur relativ geringen Unsymmetrien) erfolgen kann.

Des weiteren wird vorgeschlagen, dass jeweils ein erster Anschluss der zwei Rechengeräte über ein UND-Gatter an einen ersten Anschluss einer der zwei Sende-Empfangs-Einheiten angeschlossen ist. Bei dieser Ausführungsform sind also die Sendeanschlüsse (TxD1) des ersten Datenbus-Controllers von beiden Mikrocontrollern an dem UND-Gatter angeschlossen. Der Ausgang des UND-Gatters ist an einen ersten Anschluss des gemeinsamen Transceivers geführt. Der Vorteil ist, dass beide Mikrocontroller über einen gemeinsamen Transceiver an dem externen Datenbus angeschlossen werden können. Durch die UND-Verknüpfung der Sendesignale beider Mikrocontroller wird über den gemeinsamen Transceiver immer dann ein dominanter Pegel auf den externen Datenbus ausgegeben, wenn der erste Mikrocontroller, der zweite Mikrocontroller oder beide Mikrocontroller einen Pegel ausgeben. Es wird nur dann kein dominanter Pegel auf den externen Datenbus ausgegeben, wenn beide Mikrocontroller inaktiv sind. Der in diesem Fall nicht genutzte zweite Transceiver des Datenbus-Interfaces kann für andere Zwecke genutzt werden. So ist es beispielsweise denkbar, über den ungenutzten Transceiver während einer Test- und Applikationsphase die über den internen Datenbus übertragenen Signale nach außen auf einen externen Datenbus zu legen, um sie beobachten und analysieren zu können.

Vorzugsweise ist jeweils ein zweiter Anschluss der zwei Rechengeräte direkt an einen zweiten Anschluss der einen Sende-Empfangs-Einheit angeschlossen. Anders ausgedrückt, sind die Empfangsanschlüsse (RxD1) des ersten Datenbus-Controllers von beiden Mikrocontrollern direkt an dem zweiten Anschluss des gemeinsamen Transceivers angeschlossen. Von dem Transceiver empfangene Signale werden also an beide Mikrocontroller weitergeleitet.

Darüber hinaus wird vorgeschlagen, dass parallel zu dem UND-Gatter zwischen dem ersten Anschluss des ersten Rechengeräts und dem ersten Anschluss der einen Sende-Empfangs-Einheit ein erstes Brückenelement angeordnet ist. Durch Öffnen und Schließen des Brückenelements kann das UND-Gatter überbrückt und damit quasi inaktiviert werden. Auf diese Weise kann der Sendeanschluss des ersten Datenbus-Controllers des zweiten Mikrocontrollers und damit der gesamte Sendepfad von dem UND-Gatter bzw. von dem ersten Transceiver abgekoppelt werden. Über den ersten Transceiver werden nur noch Signale des ersten Mikrocontrollers auf den externen Datenbus übertragen. Bei geschlossenem ersten Brückenelement wird das UND-Gatter vorzugsweise nicht bestückt. Selbstverständlich kann statt des ersten Brückenelements auch ein beliebig anderes Schaltelement und/oder an einer beliebig anderen Stelle der Schaltung des Datenbus-Interfaces eingesetzt werden, sofern damit die gleiche Wirkung (Trennen des zweiten Rechengeräts von dem ersten Transceiver) erzielt werden kann.

Vorteilhafterweise ist der zweite Anschluss des zweiten Rechengeräts über ein zweites Brückenelement an eine Verbindungsleitung zwischen dem zweiten Anschluss des ersten Rechengeräts und dem zweiten Anschluss der ersten Sende-Empfangs-Einheit angeschlossen. Über dieses Brückenelement kann der Empfangspfad zu dem zweiten Mikrocontroller unterbrochen und damit der Empfangsanschluss des ersten Datenbus-Controllers des zweiten Mikrocontrollers von dem ersten Transceiver bzw. von dem externen Datenbus abgekoppelt werden. Der zweite Mikrocontroller kann nun entweder über den internen Datenbus und den ersten Mikrocontroller oder aber über den zweiten Transceiver auf den externen Datenbus zugreifen. Durch Schließen des ersten Brückenelements und Öffnen des zweiten Brückenelements wird der zweite Mikrocontroller vollständig von dem ersten Transceiver abgekoppelt. Die Stellung der Brückenelemente wird vor dem eigentlichen Serieneinsatz des Datenbus-Interfaces konfiguriert. Statt des zweiten Brückenelements kann auch ein beliebig anderes gleichwirkendes Schaltelement auch an einer anderen Stelle in der Schaltung verwendet werden.

Es wird des weiteren vorgeschlagen, dass der interne Datenbus über ein Schaltelement an eine der zwei Sende-Empfangs-Einheiten angeschlossen ist, wobei eine Verbindung zwischen dem internen Datenbus und der zweiten Sende-Empfangs-Einheit mittels des Schaltelements hergestellt und unterbrochen werden kann. Das Schaltelement ist vorzugsweise als ein zwischen den beiden Leitungen des internen Datenbusses angeordnetes drittes Brückenelement ausgebildet. Über das dritte Brückelement kann der interne Datenbus beispielsweise während einer Applikationsphase nach außen auf den externen Datenbus geführt werden.

Schließlich wird vorgeschlagen, dass der interne Datenbus nach dem Controller-Area-Network (CAN)-Standard arbeitet. Ebenso wird vorgeschlagen, dass mindestens einer der externen Datenbusse nach dem Controller-Area-Network (CAN)-Standard arbeitet. Wenn mehr als ein externer Datenbus vorgesehen ist, arbeiten vorzugsweise beide externen Datenbusse nach dem gleichen Standard, beispielsweise nach dem CAN-Standard, jedoch falls erforderlich mit unterschiedlichen Datenraten. Durch die Vereinheitlichung der Standards zur Datenübertragung über die Datenbusse, ergibt sich eine bessere Kompatibilität, so dass ohne großen zusätzlichen Aufwand beispielsweise Signale von dem internen Datenbus auf den externen Datenbus geführt werden können.

Als eine weitere Lösung der Aufgabe der vorliegenden Erfindung wird ausgehend von dem Steuergerät der eingangs genannten Art vorgeschlagen, dass das Steuergerät ein erfindungsgemäßes Datenbus-Interface aufweist.

### Zeichnungen

Weitere Merkmale, Anwendungsmöglichkeiten und Vorteile der Erfindung ergeben sich aus der nachfolgenden Beschreibung von Ausführungsbeispielen der Erfindung, die in der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung. Es zeigen:
Figur 1 ein erfindungsgemäßes Steuergerät gemäß einer ersten bevorzugten Ausführungsform; und
Figur 2 ein erfindungsgemäßes Steuergerät gemäß einer zweiten bevorzugten Ausführungsform.

### Beschreibung der Ausführungsbeispiele

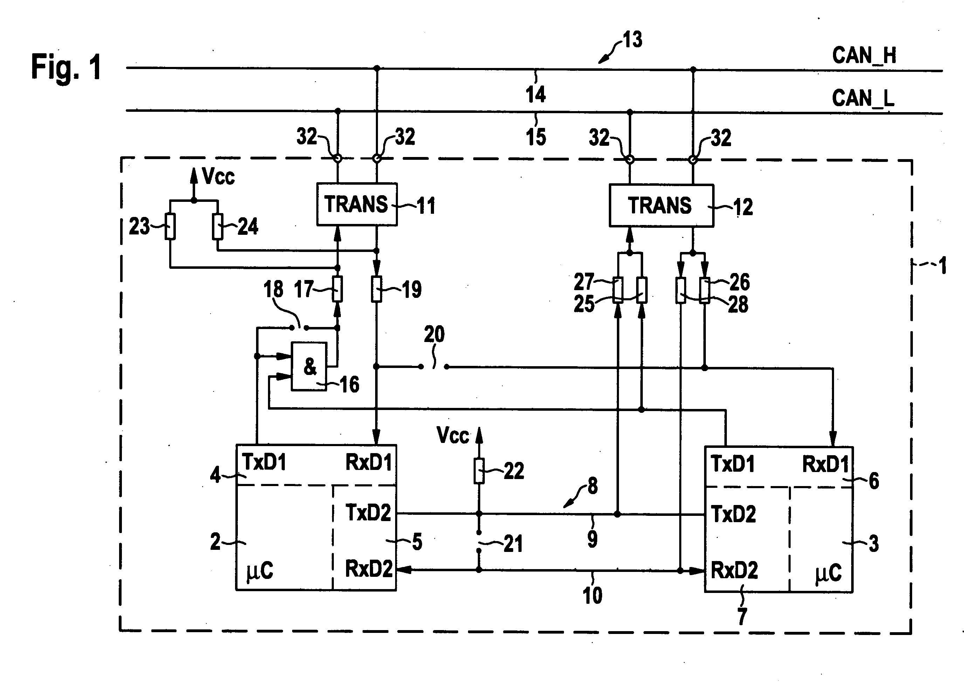

In Figur 1 ist ein erfindungsgemäßes Steuergerät in seiner Gesamtheit mit dem Bezugszeichen 1 bezeichnet. Das Steuergerät 1 umfasst ein erstes Rechengerät 2, das als ein Mikroprozessor ausgebildet ist, und ein zweites Rechengerät 3, das ebenfalls als ein Mikroprozessor ausgebildet ist. Auf den Rechengeräten 2, 3 werden Computerprogramme abgearbeitet, so dass die Rechengeräte 2, 3 bestimmte Steuerungs- und/oder Riegelungsfunktionen erfüllen können. Ein bevorzugter Einsatzbereich des Steuergerätes 1 ist beispielsweise der Kraftfahrzeugbereich. Das erste Rechengerät 2 kann beispielsweise die Steuerung und/oder Regelung einer Brennkraftmaschine und das zweite Rechengerät 3 die Steuerung und/oder Regelung eines Getriebes übernehmen.

Jedes der beiden Rechengeräte 2, 3 weist zwei separate Datenbus-Controller 4, 5 bzw. 6, 7 auf. Der erste Datenbus-Controller 4 des ersten Rechengerätes 2 umfasst einen ersten Sendeanschluss TxD1 und einen ersten Empfangsanschluss RxD1 auf. Der zweite Datenbus-Controller 5 des ersten Rechengerätes 2 umfasst einen zweiten Sendeanschluss TxD2 und einen zweiten Empfangsanschluss RxD2. Entsprechendes gilt für den ersten und zweiten Datenbus-Controller 6, 7 des zweiten Rechengerätes 3. Die Anschlüsse TxD1 der ersten Datenbus-Controller 4, 6 der beiden Rechengeräte 2, 3 sind als Gegentakt-Ausgänge, sogenannte push-pull-Anschlüsse, ausgebildet. Die beiden Anschlüsse TxD2 und RxD2 der zweiten Datenbus-Controller 5, 7 der beiden Rechengeräte 2, 3 sind als offene Kollektor-Anschlüsse, sogenannte open-collector-Anschlüsse, ausgebildet.

Die beiden Rechengeräte 2, 3 kommunizieren über einen internen Datenbus 8 miteinander. Der interne Datenbus 8 umfasst eine erste Leitung 9, welche die Sendeanschlüsse TxD2 der zweiten Datenbus-Controller 5, 7 der beiden Rechengeräte 2, 3 miteinander verbindet, sowie eine zweite Leitung 10, welche die Empfangsanschlüsse RxD2 der zweiten Datenbus-Controller 5, 7 der beiden Rechengeräte 2, 3 miteinander verbindet. Aufgrund der relativ geringen Länge der Leitungen 9, 10, der geringeren Übertragungsgeschwindigkeit zwischen den beiden Rechengeräten 2, 3 über den internen Datenbus 8 und den nahezu nicht vorhandenen Störern (Potential- und/oder Pegelversetzer) kann auf den Einsatz gesonderter Sende-Empfangs-Einheiten (sogenannter Transceiver), über welche die Rechengeräte 2, 3 an die Leitungen 9, 10 angeschlossen werden können, verzichtet werden. Die Datenübertragung über den internen Datenbus 8 erfolgt nach einem bestimmten Übertragungsprotokoll, beispielsweise nach dem CAN (Controller Area Network)-Standard.

Das Steuergerät 1 umfasst außerdem zwei Sende-Empfangs-Einheiten (Transceiver) 11, 12. Die Transceiver 11, 12 stehen mit einem externen Datenbus 13 in Verbindung, der als ein CAN-Bus mit zwei Leitungen 14, 15 (CAN_H, CAN_L) ausgebildet ist. Die Transceiver 11, 12 dienen zum Aufbereiten von Signalen, die von dem externen Datenbus 13 empfangen werden oder über diesen gesendet werden sollen.

Gemäß einer ersten Ausgestaltung sind die beiden Rechengeräte 2, 3 derart mit dem ersten Transceiver 11 verschaltet, dass beide Rechengeräte 2, 3 über diesen einen Transceiver 11 mit dem externen Datenbus 13 in Verbindung stehen. Im Einzelnen sind die ersten Sendeanschlüsse TxD1 der ersten Datenbus-Controller 4, 6 der beiden Rechengeräte 2, 3 an die Eingänge eines UND-Gatters 16 geführt. Der Ausgang des UND-Gatters 16 ist über einen ersten Widerstand 17 an einen ersten Anschluss des Transceivers 11 geführt. Parallel zu dem UND-Gatter 16 ist von dem ersten Sendeanschluss TxD1 des ersten Datenbus-Controllers 4 des ersten Rechengerätes 2 an den Ausgang des UND-Gatters 16 ein Brückenelement 18 angeordnet.

Der zweite Anschluss des Transceivers 11 ist über einen zweiten Widerstand 19 an den ersten Empfangsanschluss RxD1 des ersten Datenbus-Controllers 4 des ersten Rechengerätes 2 und über ein zweites Brückenelement 20 an den ersten Empfangsanschluss RxD1 des ersten Datenbus-Controllers 6 des zweiten Rechengerätes 3 angeschlossen. An dem Ausgang des UND-Gatters 16 liegt ein dominanter Signalpegel an, wenn das erste Rechengerät 2 oder das zweite Rechengerät 3 einen dominanten Signalpegel aussendet, oder wenn beide Rechengeräte 2, 3 einen dominanten Signalpegel aussenden. Es liegt nur dann kein dominanter Signalpegel an, wenn beide Rechengeräte 2, 3 inaktiv sind. Insofern werden also die zu sendenden Signale von beiden Rechengeräten 2, 3 über den Transceiver 11 an den externen Datenbus 13 weitergeleitet. Von dem Datenbus 13 empfangene Signale werden über den Transceiver 11 an beide Rechengeräte 2, 3 geleitet.

Zur Realisierung dieser Funktion muss das erste Brückenelement 18 offen und das zweite Brückenelement 20 geschlossen sein. Da jeder Datenbus-Controller 4 bis 7 nur eine begrenzte Anzahl an Nachrichten-Objekten, sogenannten Message-Objects, verwalten kann, hat die beschriebene erste Ausgestaltung des erfindungsgemäßen Steuergeräts 1 den Vorteil, dass das Steuergerät 1 die doppelte Anzahl an Nachrichtenobjekten auf dem externen Datenbus 13 verwalten kann, da die beiden Datenbus-Controller 4, 6 jeweils die übliche Anzahl an Nachrichten, gemeinsam also doppelt so viele Nachrichten, auf dem externen Datenbus 13 verwalten können.

Gemäß einer zweiten Ausgestaltung ist es auch denkbar, dass das zweite Rechengerät 3 über den externen Datenbus 13 zu übertragende Informationen zunächst über den internen Datenbus 8 an das erste Rechengerät 2 übermittelt, welches die Informationen dann über den ersten Transceiver 11 an den externen Datenbus 13 weiterleitet. In diesem Fall würde das Rechengerät 2 also gewissermaßen als eine Durchreichestation arbeiten. Zur Realisierung dieser Funktion muss ein zwischen den beiden Leitungen 9, 10 des internen Datenbusses 8 angeordnetes drittes Brückenelement 21 geschlossen sein. Beide Leitungen 9, 10 des internen Datenbusses 8 sind über einen Pull-up-Widerstand 22 an eine Versorgungsspannung Vcc, die beispielsweise 1,8 Volt, 3,3 Volt oder 5,0 Volt sein kann, angeschlossen. Auf diese Weise können Signale auf den Leitungen 9, 10, die an die open-collector-Anschlüsse TxD2 und RxD2 angeschlossen sind, auf einen Pegel "high" (1,8 Volt; 3,3 Volt; 5,0 Volt oder eine andere Spannung) angehoben werden. Diesem Zweck dienen auch die beiden Pull-up-Widerstände 23 und 24, über welche die rechengeräteseitigen Anschlüsse des Transceivers 11 an die Versorgungsspannung Vcc angeschlossen sind.

Für bestimmte Anwendungsfälle des Steuergerätes 1 ist es zweckmäßig, wenn das zweite Rechengerät 3 gemäß einer dritten Ausgestaltung über einen eigenen Transceiver an den externen Datenbus 13 angeschlossen ist. Zu diesem Zweck sind die Anschlüsse TxD1 und RxD1 des ersten Datenbus-Controllers 6 des zweiten Rechengerätes 3 über einen dritten Widerstand 25 und einen vierten Widerstand 26, die als Brücken dienen, an die rechengeräteseitige Anschlüsse des zweiten Transceivers 12 angeschlossen. Damit bei der gegebenen Schaltung dann beide Rechengeräte 2, 3 über gesonderte Transceiver 11, 12 auf den externen Datenbus 13 zugreifen, muss das erste Brückenelement 18 geschlossen, das UND-Gatter 16 herausgenommen, und das zweite Brückenelement 20 geöffnet werden.

Während der Entwicklungs- und/oder Applikationsphase des Steuergerätes 1 kann es zweckmäßig sein, den internen Datenbus 8 auf den externen Datenbus 13 zu legen. Zu diesem Zweck sind gemäß einer vierten Ausgestaltung die beiden Leitungen 9, 10 des internen Datenbusses 8 über einen fünften Widerstand 27 und einen sechsten Widerstand 28 an die rechnergeräteseitigen Anschlüsse des zweiten Transceivers 12 angeschlossen. Auf diese Weise kann die über den internen Datenbus 8 getätigte Informationsübertragung von außerhalb des Steuergerätes 1 über den externen Datenbus 13 beobachtet und analysiert werden. Zur Realisierung dieser Funktion muss das dritte Brückenelement 21 geöffnet werden.

Ein wesentlicher Teil des erfindungsgemäßen Steuergerätes 1 ist ein Datenbus-Interface, welches durch die beiden Transceiver 11, 12 und diejenigen Teile der Rechengeräte 2, 3 gebildet wird, die für die Kommunikation mit dem internen Datenbus 8 und dem externen Datenbus 13 zuständig sind. Außer diesen Teilen für die Kommunikation, welche zusammen mit der erforderlichen Verschaltung das Datenbus-Interface bilden, verfügen die Rechengeräte 2, 3 darüber hinaus noch über Teile zur Erfüllung ihrer bestimmungsgemäßen Steuerungs- und/oder Regelungsfunktion. Diese Teile arbeiten beispielsweise das Steuerprogramm auf den Rechengeräten 2, 3 ab.

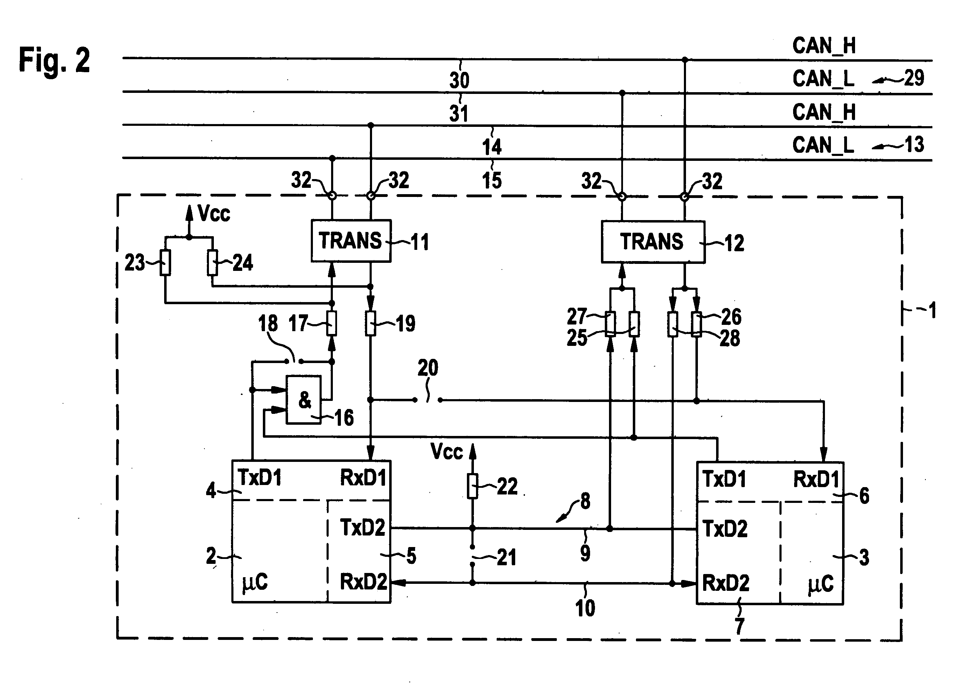

In Figur 2 ist ein erfindungsgemäßes Steuergerät 1 gemäß einer zweiten bevorzugten Ausführungsform dargestellt. Dabei ist die eigentliche Schaltung des Datenbus-Interfaces identisch mit der in Figur 1 dargestellten Schaltung. Im Unterschied zu der Ausführungsform aus Figur 1 ist das Steuergerät 1 in Figur 2 an zwei unterschiedliche externe Datenbusse angeschlossen. So ist der erste Transceiver 11 an einen ersten Datenbus 13 mit den Leitungen 14, 15 (CAN_H, CAN_L) angeschlossen. Der zweite Transceiver 12 ist an einen zweiten externen Datenbus 29 mit den Leitungen 30, 31 (CAN_H, CAN_L) angeschlossen. In dem dargestellten Ausführungsbeispiel werden über beide externen Datenbusse 13, 29 Informationen nach dem gleichen Übertragungsprotokoll, nämlich dem CAN-Standard, übertragen. Die Informationen können über die beiden externen Datenbusse 13, 29 mit den gleichen oder mit unterschiedlichen Datenübertragungsraten übermittelt werden. Sämtliche weiter oben hinsichtlich des ersten Ausführungsbeispiels aus Figur 1 beschriebenen Ausgestaltungen können auch bei dem in Figur 2 dargestellten Ausführungsbeispiel realisiert werden. Bei dem dargestellten Ausführungsbeispiel überträgt und empfängt das erste Rechengerät 2 Daten über den ersten externen Datenbus 13 und überträgt und empfängt das zweite Rechengerät 3 Daten über den zweiten externen Datenbus 29.

Ebenso kann die Informationsübertragung zwischen den beiden Rechengeräten 2, 3 über den internen Datenbus 8 über den zweiten Transceiver 12 nach außen an den zweiten externen Datenbus 29 geführt und über diesen beobachtet werden.

Mit Hilfe des erfindungsgemäßen multifunktionalen Datenbus-Interfaces lassen sich eine Vielzahl von Aufgaben und Funktionalitäten in dem Steuergerät 1 erzielen:

Mit Hilfe der elektronischen Schaltung für den internen Datenbus 8 ist eine Kommunikation der beiden Rechengeräte 2, 3 (Mikro-Controller) in dem Steuergerät 1 über den internen Datenbus 8 mit Übertragungsraten von bis zu 500 kBaud möglich. Der Datenbus 8 wird auch als Inhouse-CAN-Bus oder als steuergeräteinterner CAN-Bus bezeichnet. Falls erwünscht, und keine Verbindung an Steuergeräte-Anschlussklemmen 32 des Steuergerätes 1 erstellt wird, erfolgt der Datenaustausch der beiden Rechengeräte 2, 3 völlig diskret und ist außerhalb des Steuergerätes 1 nicht zu erfassen. Der interne Datenbus 8 ist bei entsprechender Bauteilbestückung mit externen, frei käuflichen Datenbus-Diagnose-Tools voll monitorfähig. Softwareentwickler können dadurch auf effiziente Art und Weise die Verifikation ihrer Software, insbesondere des Informationsaustausches auf den internen Datenbus 8, durchführen. Der interne Datenbus 8 kann mit einem steuergeräteexternen Datenbus 13 oder 29 über die Steuergeräte-Anschlussklemmen 32 verbunden werden. Dadurch entfällt die Konstruktion weiterer Adapterleiterplatten für Applikationszwecke. Der interne Datenbus 8 wird mit einem externen Datenbus 13, 29 verbunden, beispielsweise mit dem Ziel, Monitoring und Kommunikation mit weiteren Mikroprozessoren in anderen Steuergeräten zu betreiben.

Mit Hilfe der elektronischen Schaltung für das Datenbus-Interface kann jeder der beiden Rechengeräte 2, 3 in dem Steuergerät 1 bei geeigneter Bauteilbestückung auf einen gemeinsamen steuergeräteexternen Datenbus 13 oder jeweils auf einen separaten Datenbus 13, 29, gegebenenfalls mit unterschiedlichen Übertragungsraten, aufgeschaltet werden. Der Bauteilaufwand und der Platzbedarf auf der Leiterplatte sind dabei äußerst gering, weil die zur Aufschaltung auf den externen Datenbus 13, 29 erforderlichen Transceiver 11, 12 flexibel genutzt werden. Insbesondere erlaubt die Schaltung die folgenden Besonderheiten:
- Bei hinreichend geringer Anzahl von zu verwaltenden Nachrichtenobjekten kann nur ein Rechengerät 2 oder 3 auf den steuergeräteexternen Datenbus 13 geschaltet werden. Informationen, die für das andere Rechengerät 3 über den externen Datenbus 13 zu empfangen oder senden sind, werden dabei über den internen Datenbus 8 ausgetauscht. Der Vorteil liegt dabei in einem sehr geringen Bauteilaufwand.
- Das zweite Rechengerät 3 kann auf den Datenbus-Pfad des ersten Rechengerätes 2 aufgeschaltet werden. Dazu ist das erste Brückenelement 18 geöffnet und das zweite Brückenelement 20 geschlossen. Dies hat den Vorteil, dass die doppelte Anzahl von Nachrichtenobjekten in dem Gesamtsystem verwaltet werden kann. Es ist nur ein Transceiver 11 notwendig, um beide Rechengeräte 2, 3 auf den externen Datenbus 13 aufzuschalten. Die Konfiguration erlaubt weiterhin das serielle Programmieren der Mikroprozessorkerne beider Rechengeräte 2, 3 über den externen Datenbus 13 mit entsprechender Software.
- Das zweite Rechengerät 3 kann über den zweiten Transceiver 12 auf einen separaten externen Datenbus 29 aufgeschaltet werden. Voraussetzung dafür ist, dass kein Monitoring für den internen Datenbus 8 stattfinden muss und der Transceiver 12 damit für eine Ankopplung des zweiten Rechengerätes 3 an den externen Datenbus 29 zur Verfügung steht. Damit kann das Gesamtsystem über zwei Datenbusse 13, 29 kommunizieren, die auch unterschiedliche Übertragungsraten haben können. Der bidirektionale Informtionsaustausch über das Steuergerät 1 hinweg in beide Datenbusse 13, 29 ist möglich. Diese Funktionalität wird auch als Gateway-Funktionalität bezeichnet. Die Rechnerkerne beider Rechengeräte 2, 3 lassen sich nun mit entsprechender Software gleichzeitig über die Datenbusse 13, 29 programmieren.

Mit Hilfe der beschriebenen erfindungsgemäßen elektronischen Schaltung lässt sich in einem Steuergerät 1 mit zwei Rechengeräten 2, 3, die jeweils zwei Datenbus-Controller 4, 5 bzw. 6, 7 besitzen, ein Datenbus-Interface konfigurieren, das nahezu alle Arten einer Datenbus-Vernetzung beider Rechengeräte 2, 3 ermöglicht. Es lassen sich eine Vielzahl von Funktionen mit Hilfe einer relativ einfachen Schaltung realisieren:
- Kommunikation zweier Rechengeräte 2, 3 über eine steuergeräteinterne Datenbus-Verbindung 8 mit hoher Übertragungsrate. Der Datenaustausch ist außerhalb des Steuergerätes 1 nicht zu erfassen.
- Monitoring und Kontrolle des Informationsaustausches über den internen Datenbus 8 während der Entwicklungs- und/oder Applikationsphase
- Aufschalten des internen Datenbusses 8 auf einen externen Datenbus 13 oder 29.
- Zwei Rechengeräte 2, 3 werden unter Nutzung von lediglich einem Transceiver 11 auf einen gemeinsamen externen Datenbus 13 geschaltet. Dadurch kann die doppelte Anzahl von Nachrichtenobjekten in dem Gesamtsystem verwaltet werden.
- Die Mikroprozessorkerne von beiden Rechengeräten 2, 3 können nacheinander über den externen Datenbus 13 oder parallel über die zwei Datenbusse 13, 29 programmiert werden.
- CAN-Gateway-Funktionalität.

Das erfindungsgemäße Steuergerät 1 wurde für zwei Rechengeräte 2, 3 und für zwei Transceiver 11, 12 beschrieben. Selbstverständlich ist es möglich, das erfindungsgemäße Steuergerät auch mit mehr als zwei Rechengeräten und mit mehr als zwei Transceivern zu realisieren.

## Patentansprüche

1. Datenbus-Interface für ein Steuergerät (1), das Interface umfassend:
- zwei Rechengeräte (2, 3), insbesondere zwei Mikroprozessoren, die über einen internen Datenbus (8) miteinander kommunizieren; und
- zwei Sende-Empfangs-Einheiten (Transceiver) (11, 12), die entweder an einen gleichen externen Datenbus (13) oder an zwei verschiedene externe Datenbusse (13, 29) angeschlossen und derart mit den zwei Rechengeräten (2, 3) verschaltet sind, dass die zwei Rechengeräte (2, 3) entweder an den gleichen externen Datenbus (13) oder an die zwei verschiedenen Datenbusse (13, 29) angeschlossen sind,
**dadurch gekennzeichnet, dass** ein Empfangsanschluss (RxD1) des zweiten Rechengeräts (3) über ein zweites Brückenelement (20) an eine Verbindungsleitung zwischen einem Empfangsanschluss (RxD1) des ersten Rechengeräts (2) und dem zweiten Anschluss der einen Sende-Empfangs-Einheit (11) angeschlossen ist,
und dass wenn die zwei Rechengeräte (2, 3) an den gleichen externen Datenbus (13) angeschlossen ist das zweite Brückenelement geschlossen ist und wenn die zwei Rechengeräte an die zwei verschiedenen Datenbusse (13, 29) angeschlossen sind das zweite Brückenelement geöffnet ist.

2. Datenbus-Interface nach Anspruch 1, **dadurch gekennzeichnet, dass** der interne Datenbus (8) zwei Leitungen (9, 10) umfasst, die ohne Sende-Empfangs-Einheiten (Transceiver) an die zwei Rechengeräte (2, 3) angeschlossen sind.

3. Datenbus-Interface nach Anspruch 2, **dadurch gekennzeichnet, dass** die Leitungen (9, 10) des internen Datenbusses (8) über open-collector-Anschlüsse an die zwei Rechengeräte (2, 3) angeschlossen sind.

4. Datenbus-Interface nach einem der Ansprüche 1 bis 3, **dadurch gekennzeichnet, dass** die zwei Rechengeräte (2, 3) über push-pull-Anschlüsse an die Sende-Empfangs-Einheiten (11, 12) angeschlossen sind.

5. Datenbus-Interface nach einem der Ansprüche 1 bis 4, **dadurch gekennzeichnet, dass** jeweils ein erster Anschluss (TxD1) der zwei Rechengeräte (2, 3) über ein UND-Gatter (16) an einen ersten Anschluss einer der zwei Sende-Empfangs-Einheiten (11) angeschlossen ist.

6. Datenbus-Interface nach einem der Ansprüche 1 bis 5, **dadurch gekennzeichnet, dass** jeweils ein zweiter Anschluss (RxD1) der zwei Rechengeräte (2, 3) direkt an einen zweiten Anschluss der einen Sende-Empfangs-Einheit (11) angeschlossen ist.

7. Datenbus-Interface nach Anspruch 5 oder 6, **dadurch gekennzeichnet, dass** parallel zu dem UND-Gatter (16) zwischen dem ersten Anschluss (TxD1) des ersten Rechengeräts (2) und dem ersten Anschluss der einen Sende-Empfangs-Einheit (11) ein erstes Brückenelement (18) angeordnet ist.

8. Datenbus-Interface nach einem der Ansprüche 1 bis 7, **dadurch gekennzeichnet, dass** der interne Datenbus (8) über ein Schaltelement (21) an eine der zwei Sende-Empfangs-Einheiten (12) angeschlossen ist, wobei eine Verbindung zwischen dem internen Datenbus (8) und der einen Sende-Empfangs-Einheit (12) mittels des Schaltelements (21) hergestellt und unterbrochen werden kann.

9. Datenbus-Interface nach Anspruch 8, **dadurch gekennzeichnet, dass** das Schaltelement (21) als ein zwischen den beiden Leitungen (9, 10) des internen Datenbusses (8) ausgebildetes drittes Brückenelement ausgebildet ist.

10. Datenbus-Interface nach einem der Ansprüche 1 bis 9, **dadurch gekennzeichnet, dass** der interne Datenbus nach dem Controller-Area-Network (CAN)-Standard arbeitet.

11. Datenbus-Interface nach einem der Ansprüche 1 bis 10, **dadurch gekennzeichnet, dass** mindestens einer der externen Datenbusse (13, 29) nach dem Controller-Area-Network (CAN)-Standard arbeitet.

12. Steuergerät (1) mit einem Datenbus-Interface zum Zugriff auf einen Datenbus (13, 29) zur Kommunikation mit mindestens einem anderen Steuergerät über den Datenbus (13, 29), **dadurch gekennzeichnet, dass** das Steuergerät (1) ein Datenbus-Interface nach einem der vorangegangenen Ansprüche aufweist.

## Claims

1. Data bus interface for a controller (1), said interface comprising:
- two computing elements (2, 3), particularly two microprocessors, which communicate with one another via an internal data bus (8); and
- two transmission/reception units (transceivers) (11, 12) which are connected either to the same external data bus (13) or to two different external data buses (13, 29) and are connected up to the two computing elements (2, 3) such that the two computing elements (2, 3) are connected either to the same external data bus (13) or to the two different data buses (13, 29),
**characterized in that** a reception connection (RxD1) of the second computing element (3) is connected by means of a second bridge element (20) to a connecting line between a reception connection (RxD1) of the first computing element (2) and the second connection of the one transmission/reception unit (11),
and **in that** if the two computing elements (2, 3) are connected to the same external data bus (13) then the second bridge element is closed, and if the two computing elements are connected to the two different data buses (13, 29) then the second bridge element is open.

2. Data bus interface according to Claim 1,
**characterized in that** the internal data bus (8) comprises two lines (9, 10) which are connected to the two computing elements (2, 3) without transmission/reception units (transceivers).

3. Data bus interface according to Claim 2,
**characterized in that** the lines (9, 10) in the internal data bus (8) are connected to the two computing elements (2, 3) by means of open-collector connections.

4. Data bus interface according to one of Claims 1 to 3, **characterized in that** the two computing elements (2, 3) are connected to the transmission/reception units (11, 12) by means of push-pull connections.

5. Data bus interface according to one of Claims 1 to 4, **characterized in that** a respective first connection (TxD1) of the two computing elements (2, 3) is connected to a first connection of one of the two transmission/reception units (11) via an AND gate (16).

6. Data bus interface according to one of Claims 1 to 5, **characterized in that** a respective second connection (RxD1) of the two computing elements (2, 3) is connected directly to a second connection of the one transmission/reception unit (11).

7. Data bus interface according to Claim 5 or 6,
**characterized in that** a first bridge element (18) is arranged in parallel with the AND gate (16) between the first connection (TxD1) of the first computing element (2) and the first connection of the one transmission/reception unit (11).

8. Data bus interface according to one of Claims 1 to 7, **characterized in that** the internal data bus (8) is connected to one of the two transmission/reception units (12) by means of a switching element (21), wherein a connection between the internal data bus (8) and the one transmission/reception unit (12) can be made and broken by means of the switching element (21).

9. Data bus interface according to Claim 8,
**characterized in that** the switching element (21) is in the form of a third bridge element which is produced between the two lines (9, 10) of the internal data bus (8).

10. Data bus interface according to one of Claims 1 to 9, **characterized in that** the internal data bus operates on the basis of the Controller Area Network (CAN) standard.

11. Data bus interface according to one of Claims 1 to 10, **characterized in that** at least one of the external data buses (13, 29) operates on the basis of the Controller Area Network CAN standard.

12. Controller (1) having a data bus interface for accessing a data bus (13, 29) for the purpose of communication with at least one other controller via the data bus (13, 29), **characterized in that** the controller (1) has a data bus interface according to one of the preceding claims.

## Revendications

1. Interface de bus de données pour appareil de commande (1), l'interface comprenant :
- deux appareils de calcul (2, 3), en particulier deux microprocesseurs, qui communiquent l'un avec l'autre par un bus interne de données (8) et
- deux unités d'émission-réception (11, 12) ("transceivers") raccordées à un même bus externe de données (13) ou à deux bus externes de données (13, 29) différents et raccordées aux deux appareils de calcul (2, 3) de telle sorte que les appareils de calcul (2, 3) soient raccordés au même bus externe de données (13) ou aux deux bus de données (13, 29) différents,
**caractérisée en ce que**
une borne de réception (RxD1) du deuxième appareil de calcul (3) est raccordée par un deuxième élément de pont (20) à un conducteur qui raccorde une borne de réception (RxD1) du premier appareil de calcul (2) à la deuxième borne de l'unité (11) d'émission et de réception et
**en ce que** si les deux appareils de calcul (2, 3) sont raccordés au même bus externe de données (13), le deuxième élément de pont est fermé et si les deux appareils de calcul sont raccordés aux deux bus de données (13, 29) différents, le deuxième élément de pont est ouvert.

2. Interface de bus de données selon la revendication 1, **caractérisée en ce que** le bus interne de données (8) comprend deux conducteurs (9, 10) qui sont raccordés sans unités d'émission et de réception ("transceivers") aux deux appareils de calcul (2, 3).

3. Interface de bus de données selon la revendication 2, **caractérisée en ce que** les conducteurs (9, 10) du bus interne de données (8) sont raccordés par des bornes de collecteur ouvert aux deux appareils de calcul (2, 3).

4. Interface de bus de données selon l'une des revendications 1 à 3, **caractérisée en ce que** les deux appareils de calcul (2, 3) sont raccordés aux unités d'émission et de réception (11, 12) par des bornes dites "push-pull".

5. Interface de bus de données selon l'une des revendications 1 à 4, **caractérisée en ce qu'**une première borne (TxD1) de chacun des deux appareils de calcul (2, 3) est raccordée par une grille ET (16) à une première borne de l'une des deux unités d'émission et de réception (11).

6. Interface de bus de données selon l'une des revendications 1 à 5, **caractérisée en ce qu'**une deuxième borne (RxD1) de chacun des deux appareils de calcul (2, 3) est raccordée directement à une deuxième borne de l'unité d'émission et de réception (11).

7. Interface de bus de données selon les revendications 5 ou 6, **caractérisée en ce qu'**un premier élément de pont (18) est disposé parallèlement à la grille ET (16) entre la première borne (TxD1) du premier appareil de calcul (2) et la première borne de l'unité d'émission et de réception (11).

8. Interface de bus de données selon l'une des revendications 1 à 7, **caractérisée en ce que** le bus interne de données (8) est raccordé par l'intermédiaire d'un élément de commutation (21) à l'une des deux unités d'émission et de réception (12) et **en ce qu'**une liaison entre le bus interne de données (8) et l'une (12) des unités d'émission et de réception peut être établie ou interrompue au moyen de l'élément de commutation (21).

9. Interface de bus de données selon la revendication 8, **caractérisée en ce que** l'élément de commutation (21) est configuré comme troisième élément de pont formé entre les deux conducteurs (9, 10) du bus interne de données (8).

10. Interface de bus de données selon l'une des revendications 1 à 9, **caractérisée en ce que** le bus interne de données travaille selon la norme dite "Controller-Area-Network" (CAN).

11. Interface de bus de données selon l'une des revendications 1 à 10, **caractérisée en ce qu'**au moins l'un des bus externes de données (13, 29) travaille selon la norme Controller-Area-Network (CAN).

12. Appareil de commande (1) doté d'une interface de bus de données qui donne l'accès à un bus de données (13, 29) en vue d'établir la communication avec un autre appareil de commande par le bus de données (13, 29),
**caractérisé en ce que**
l'appareil de commande (1) présente une interface de bus de données selon l'une des revendications précédentes.
